# EUROPÄISCHE PATENTSCHRIFT

(11) **EP 3 286 037 B1**
(45) Veröffentlichungstag und Bekanntmachung des Hinweises auf die Patenterteilung: **11.05.2022**
(21) Anmeldenummer: 16717659.3
(22) Anmeldetag: 22.04.2016
(51) Int. Cl.: B60N 2/90, B60N 2/16, B60N 2/68

(54) **FAHRZEUGSITZ MIT EINER EINSTELLVORRICHTUNG**
VEHICLE SEAT HAVING AN ADJUSTING DEVICE
SIÈGE DE VÉHICULE AVEC DISPOSITIF DE RÉGLAGE

(30) Priorität: 24.04.2015 DE 102015207609
(43) Veröffentlichungstag der Anmeldung: 28.02.2018
(73) Patentinhaber: KEIPER Seating Mechanisms Co., Ltd., Shanghai 201315 (CN)
(72) Erfinder: STEMMER, Juergen, 42897 Remscheid (DE); NUDING, Susanne, 51467 Bergisch Gladbach (DE)
(74) Vertreter: Liedtke & Partner Patentanwälte
(86) Internationale Anmeldenummer: PCT/EP2016/059002
(87) Internationale Veröffentlichungsnummer: WO 2016/170110

(56) Entgegenhaltungen:
- EP-A1- 0 479 449
- EP-A1- 1 864 851
- WO-A1-2014/084653
- WO-A1-2015/032639
- DE-A1- 10 052 234

## Beschreibung

Die Erfindung betrifft einen Fahrzeugsitz mit einer Einstellvorrichtung zum

Einstellen einer Relativposition zwischen einem ersten Bauteil und einem zweiten Bauteil des Fahrzeugsitzes, insbesondere einer Relativposition zwischen einem ersten Bauteil einer Sitzhöheneinstellkinematik und einem zweiten Bauteil der Sitzhöheneinstellkinematik, wobei die Einstellvorrichtung eine Arretierungsvorrichtung zum Sperren der Einstellvorrichtung mittels eines Reibschlusses zwischen einem Bremsring und Bremselementen der Einstellvorrichtung aufweist.

### Stand der Technik

Aus dem Stand der Technik bekannte Einstellvorrichtungen weisen eine Arretierungsvorrichtung auf, welche eine Sperrung der Einstellvorrichtung mittels eines Reibschlusses zwischen einem Bremsring und Bremselementen gewährleistet. Die Sperrung wird nur dann aufgehoben, wenn vom Benutzer eine Einstellung des Fahrzeugsitzes eingeleitet wird.

Derartige Einstellvorrichtungen sind beispielsweise aus der WO 2014/057091 A1 und der WO 2014/207201 A1 bekannt.

Aus der WO 2015/032639 A1 ist eine Fahrzeugsitzanordnung bekannt, mit einem Sitzrahmen, der zumindest ein Sitzseitenteil umfasst, einem Schwenkteil, das verschwenkbar an dem Sitzseitenteil angeordnet ist, einem Verzahnungsteil, das mit einem von Sitzseitenteil und Schwenkteil verbunden ist, und einer Antriebsvorrichtung, die an dem anderen von Sitzseitenteil und Schwenkteil angeordnet ist und ein Abtriebsritzel aufweist, das mit dem Verzahnungsteil zum Verschwenken des Schwenkteils relativ zu dem Sitzseitenteil in Eingriff steht, wobei die Antriebsvorrichtung eine Antriebsbaugruppe und ein aus einem Gehäusetopf und einem Gehäusedeckel gebildetes Gehäuse, das die Antriebsbaugruppe zumindest teilweise einfasst, aufweist, wobei der Gehäusetopf einstückig in das andere von Sitzseitenteil und Schwenkteil eingeformt ist. Der Gehäusetopf kann ein Bremstopf sein. In Den Bremstopf kann optional ein Ring eingeschweißt sein, der als Anlagefläche für Bremsbänder dient.

Fahrzeugsitze mit einer Einstellvorrichtung zum Einstellen einer Relativposition zwischen einem ersten Bauteil und einem zweiten Bauteil des Fahrzeugsitzes, wobei die Einstellvorrichtung eine Arretierungsvorrichtung zum Sperren der Einstellvorrichtung mittels eines Reibschlusses zwischen einem Bremsring und wenigstens einem Bremselement der Einstellvorrichtung aufweist, wobei der Bremsring mit dem ersten Bauteil oder dem zweiten Bauteil verschraubt ist, sind aus der WO 2014/084653 A1, der EP 0 479 449 A1, der EP 1 864 851 A1 und der DE 100 52 234 A1 bekannt.

### Aufgabe

Der Erfindung liegt die Aufgabe zu Grunde, einen Fahrzeugsitz mit einer eingangs genannten Einstellvorrichtung zu verbessern, insbesondere das Gewicht und die Kosten eines entsprechenden Fahrzeugsitzes zu reduzieren. Insbesondere soll der Bauraum des Fahrzeugsitzes in Querrichtung reduziert werden.

### Lösung

Diese Aufgabe wird erfindungsgemäß durch einen Fahrzeugsitz mit den Merkmalen des Anspruchs 1 gelöst.

Dadurch, dass der Bremsring unmittelbar mit dem ersten Bauteil oder unmittelbar mit dem zweiten Bauteil verschweißt und/oder verklebt ist, kann auf einen Adapter oder ein Anbindungsblech zur Befestigung der Einstellvorrichtung verzichtet werden. Unter dem Begriff unmittelbar verbunden ist eine Verbindung aneinander angeordneter Bauteile zu verstehen, wobei eine Zwischenlage von Schweißgut oder Klebstoff möglich ist. Die Einstellvorrichtung muss keinen Adapter zur Befestigung der Einstellvorrichtung an dem ersten Bauteil oder zur Befestigung an dem zweiten Bauteil aufweisen. Dadurch werden das Gewicht und die Kosten des Fahrzeugsitzes reduziert. Zudem ist der Bauraum des Fahrzeugsitzes in einer Querrichtung reduziert. Eine Direktintegration der Einstellvorrichtung in die Sitzstruktur des Fahrzeugsitzes ist gegeben. Direktintegration bedeutet insbesondere, dass ein gemeinsames Bauteil Bestandteil der Sitzstruktur und der Einstellvorrichtung ist.

Die Funktionsweise der Einstellvorrichtung kann den aus den Druckschriften WO 2014/057091 A1 und WO 2014/207201 A1 bekannten Einstellvorrichtungen entsprechen.

Der Bremsring ist erfindungsgemäß offen ausgebildet. Offen bedeutet, dass zwischen einer Abtriebswelle und dem Bremsring oder zwischen einem Ritzel und dem Bremsring eine Öffnung angeordnet ist, die größer ist als eine Passung. Der Bremsring kann erfindungsgemäß nicht geschlossen ausgebildet sein, so dass ein Innenraum der Einstellvorrichtung durch den Bremsring abgedichtet ist. Geschlossen bedeutet insbesondere, dass zwischen einer Abtriebswelle und dem Bremsring oder zwischen einem Ritzel und dem Bremsring keine Öffnung angeordnet ist, die größer ist als eine Spielpassung. Die Einstellvorrichtung kann einer Einstellung einer Sitzhöheneinstellkinematik des Fahrzeugsitzes dienen. Das erste Bauteil kann eine hintere Schwinge einer Sitzhöheneinstellkinematik sein. Das zweite Bauteil kann ein Sitzrahmen sein.

Die Einstellvorrichtung kann einer Einstellung einer Sitzneigungseinstellkinematik des Fahrzeugsitzes dienen.

Der Bremsring ist mittels eines Schweißverfahrens, insbesondere mittels Laserschweißen, an dem Sitzrahmen befestigt. Vorzugsweise wird der Bremsring an einem Sitzrahmenseitenteil des Sitzrahmens befestigt. Der Bremsring kann alternativ oder zusätzlich mit dem Sitzrahmen verklebt sein. Nicht erfindungsgemäß ist auch eine Befestigung mittels einer Blindvernietung oder eines Einpressens möglich. Die Einstellvorrichtung weist eine Arretierungsvorrichtung zum Sperren der Einstellvorrichtung mittels eines Reibschlusses auf und kann zusätzlich eine Sperreinheit zum formschlüssigen Verriegeln der Einstellvorrichtung aufweisen. Die Sperreinheit verhindert ein Ablaufen, das heißt ein ungewolltes Verstellen der Einstellvorrichtung.

Die Einstellvorrichtung kann eine diskontinuierliche Bewegung eines Betätigungselements in eine kontinuierliche Drehbewegung eines Ritzels übersetzen. Unter einer diskontinuierliche Bewegung ist dabei ein abwechselndes Schwenken des Betätigungselements in zwei entgegengesetzte Richtungen zu verstehen, häufig auch als ein Pumpen bezeichnet. Unter einer kontinuierlichen Bewegung ist dabei zu verstehen, dass das Ritzel in nur einer Drehrichtung dreht. Dabei kann die Drehgeschwindigkeit variieren. Vorzugsweise bewirkt eine erste Art einer diskontinuierlichen Bewegung eine Drehung des Ritzels in einer ersten Drehrichtung, und eine zweite Art einer diskontinuierlichen Bewegung eine Drehung des Ritzels in einer zweiten Drehrichtung.

Die Bremselemente sind als Rollen ausgebildet.

Die Einstellvorrichtung kann drei Rollenpaare aufweisen.

Eine Arretierungsvorrichtung kann ein Klemmkörper-Freilauf sein, dessen Grundprinzip beispielsweise aus der DE 10 2005 056 978 A1 bekannt ist. Unter einem Bremsring ist somit auch ein Klemmring zu verstehen. Unter einem Bremselement ist somit auch ein Klemmelement zu verstehen. Die Klemmelemente können sich vorzugsweise zwischen dem Klemmring und einem Abtrieb verkeilen.

Die Arretierungsvorrichtung kann zwei Funktionen erfüllen. Zum einen den Antrieb einer Sitzhöheneinstellkinematik oder einer Sitzneigungseinstellkinematik und zum anderen ein spielfreies Sperren der Sitzhöheneinstellkinematik oder der Sitzneigungseinstellkinematik, in die im Dauerbetrieb oder im Falle eines Unfalls Momente eingeleitet werden.

### Figuren und Ausführungsformen der Erfindung

Im Folgenden ist die Erfindung anhand von in den Figuren dargestellten vorteilhaften Ausführungsbeispielen näher erläutert. Die Erfindung ist jedoch nicht auf diese Ausführungsbeispiele beschränkt. Es zeigen:
- Fig. 1:: eine schematische Seitenansicht eines Fahrzeugsitzes, mit einer Sitzhöheneinstellkinematik und einer Einstellvorrichtung zum Einstellen der Sitzhöhe des Fahrzeugsitzes,
- Fig. 2:: ausschnittsweise und perspektivisch einen aus dem Stand der Technik bekannten Fahrzeugsitz mit einer Sitzhöheneinstellkinematik und einer Einstellvorrichtung zum Einstellen der Sitzhöhe des Fahrzeugsitzes,
- Fig. 3:: eine perspektivische Ansicht der Einstellvorrichtung des Fahrzeugsitzes aus Fig. 2,
- Fig. 4:: ausschnittsweise und perspektivisch ein erstes Ausführungsbeispiel eines erfindungsgemäßen Fahrzeugsitzes mit einer Sitzhöheneinstellkinematik und einer Einstellvorrichtung zum Einstellen der Sitzhöhe des Fahrzeugsitzes,
- Fig. 5:: eine perspektivische Ansicht der Einstellvorrichtung des Fahrzeugsitzes aus Fig. 4, und
- Fig. 6:: eine perspektivische Ansicht einer Einstellvorrichtung eines nicht erfindungsgemäßen Fahrzeugsitzes.

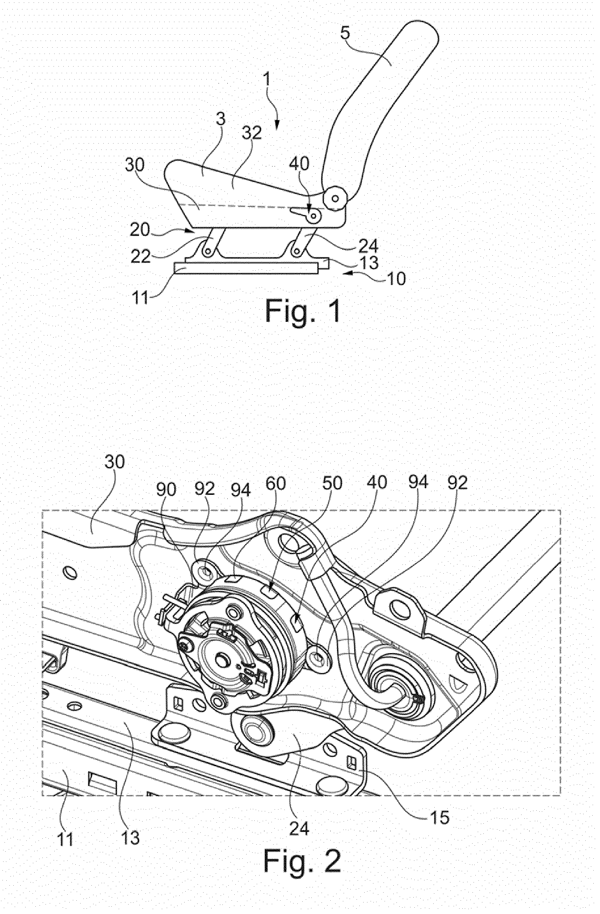

Ein in Figur 1 schematisch dargestellter Fahrzeugsitz 1 weist ein Sitzteil 3 und eine Lehne 5 auf. Der Fahrzeugsitz 1 weist für eine Änderung der Sitzlängsposition einen Längseinsteller 10 auf, der unterhalb des Sitzteils 3 angeordnet ist. Der Längseinsteller 10 weist in Querrichtung betrachtet auf beiden Seiten des Fahrzeugsitzes 1 jeweils ein Sitzschienenpaar 11, 13 auf. Jedes Sitzschienenpaar 11, 13 besteht jeweils aus einer mit der Fahrzeugstruktur verbindbaren ersten Sitzschiene 11 und einer sitzteilstrukturfesten zweiten Sitzschiene 13. Die erste Sitzschiene 11 und die zweite Sitzschiene 13 umgreifen einander wechselseitig in an sich bekannter Weise und sind in einer Längsrichtung zueinander verschiebbar aneinander gelagert.

Eine Sitzhöheneinstellkinematik 20 des Fahrzeugsitzes 1 weist auf beiden Fahrzeugsitzseiten je ein Viergelenk auf, welches aus einer Basis, vorliegend einer zweiten Schiene 13, einer vorderen Schwinge 22, einer hinteren Schwinge 24 und einem Sitzrahmen 30 gebildet ist. Die zweite Schiene 13, die vordere Schwinge 22, die hintere Schwinge 24 und der Sitzrahmen 30 sind jeweils mittels Drehgelenken zu dem Viergelenk miteinander verbunden. Der Sitzrahmen 30 trägt ein Sitzkissenpolster 32 und vorliegend auch die Lehne 5. Vorliegend ist die hintere Schwinge 24 mit einem Schienenadapter 15 der zweiten Schiene 13 gelenkig verbunden. Mittels der Sitzhöheneinstellkinematik 20 ist die Höhe des Sitzkissenpolsters 32 - und vorliegend zugleich der Lehne 5 - des Fahrzeugsitzes 1 über dem Fahrzeugboden und über der zweiten Sitzschiene 13 einstellbar.

Zum Antreiben und zum Sperren der Sitzhöheneinstellkinematik 20, das heißt zum Einstellen und Sperren einer Relativposition zwischen einem ersten Bauteil und einem zweiten Bauteil der Sitzhöheneinstellkinematik 20, ist eine Einstellvorrichtung 40, insbesondere genau eine Einstellvorrichtung 40, vorgesehen. Vorliegend ist das erste Bauteil eine hintere Schwinge 24 und das zweite Bauteil der Sitzrahmen 30. Vorliegend dient die Einstellvorrichtung 40 zum Einstellen und Sperren einer Relativposition zwischen der hinteren Schwinge 24 und dem Sitzrahmen 30 der Sitzhöheneinstellkinematik 20 und damit der Höhe des Sitzkissenpolsters 32. Wird die Einstellvorrichtung 40 betätigt, schwenkt diese die hintere Schwinge 24 und den Sitzrahmen 30 relativ zueinander.

Die Einstellvorrichtung 40 weist eine Arretierungsvorrichtung 50 zum Sperren der Einstellvorrichtung 40 auf. Die Arretierungsvorrichtung 50 weist einen Bremsring 60 und mehrere, vorliegend kreiszylindrische, Bremselemente 70 auf. Eine solche Arretierungsvorrichtung 50 kann ein an sich bekannter Klemmrollen-Freilauf sein. Zwischen dem Bremsring 60 und den Bremselementen 70 lässt sich ein Reibschluss erzeugen. Die Arretierungsvorrichtung 50 arretiert im arretierten Zustand ein Ritzel 80, das mit einer Verzahnung der hinteren Schwinge 24 in Zahneingriff ist. Der Bremsring 60 ist kinematisch fest, das heißt unbeweglich, relativ zu dem Sitzrahmen 30 angeordnet. Der Bremsring 60 ist unmittelbar an dem Sitzrahmen 30 angeordnet. Der Bremsring 60 ist an dem Sitzrahmen 30 befestigt.

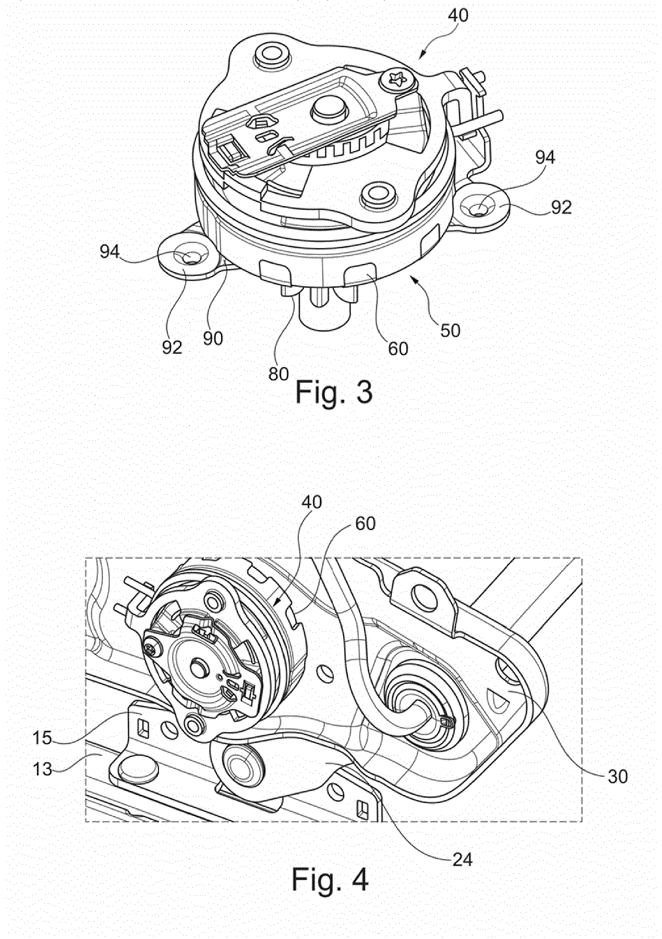

Die Figuren 2 und 3 zeigen eine aus dem Stand der Technik bekannte Einstellvorrichtung 40. Der Bremsring 60 ist mittels eines Adapters 90, vorliegend eines Anbindungsblechs, mit dem Sitzrahmen 30 verschraubt. Dazu weist das Anbindungsblechs 90 drei Befestigungslaschen 92 mit jeweils einem Durchgangsloch 94 auf. Die Einstellvorrichtung 40 ist mittels in den Figuren 2 und 3 nicht dargestellter Befestigungsmittel, vorzugsweise Schrauben oder Niete, mit dem Sitzrahmen 30 fest verbunden. Unter "fest verbunden" versteht der Fachmann, dass keine Relativverschiebung oder Relativdrehung möglich ist.

Figur 4 zeigt ausschnittsweise ein erstes Ausführungsbeispiel eines erfindungsgemäßen Fahrzeugsitzes 1. Ein Bremsring 60 einer Einstellvorrichtung 40 ist unmittelbar mit dem Sitzrahmen 30 fest verbunden. Der Bremsring 60 ist mit dem Sitzrahmen 30 verschweißt und/oder verklebt. Gegenüber dem zuvor beschriebenen Stand der Technik entfällt somit der Adapter 90. Der Bremsring 60 wirkt mit als Rollen ausgebildeten Bremselementen 70 zusammen. Es sind drei Anordnungen von jeweils zwei Bremselementen 70 gleichmäßig über dem Umfang angeordnet. Die als Rollen ausgebildeten Bremselementen 70 liegen in radialer Richtung betrachtet außen an dem Bremsring 60 an. In radialer Richtung betrachtet liegen die Bremselemente 70 innen an einem mit einem Ritzel 80 drehfest verbundenen Bauteil der Einstellvorrichtung 40 an. Das Ritzel 80 dient als Abtrieb der Einstellvorrichtung 40.

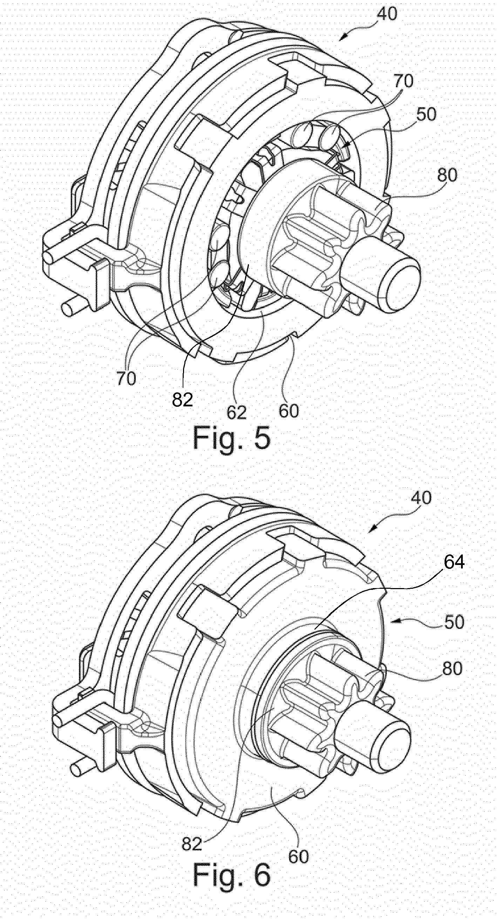

Fig. 5 zeigt die Einstellvorrichtung 40 des ersten Ausführungsbeispiels. Der Bremsring 60 weist eine topfförmige Grundform auf, die in der Mitte ein Loch 62 aufweist. Durch das Loch 62 hindurch verläuft das Ritzel 80. Der Durchmesser des Lochs 62 ist deutlich größer als ein Durchmesser eines kreiszylindrischen Fußes 82 des Ritzels 80, so dass zwischen einer Außenkontur des Fußes 82 und einer Umrandung des Lochs 62 ein umlaufender Spalt ist. Die Breite des Spalts in radialer Richtung ist größer als ein Durchmesser der Bremselemente 70.

Fig. 6 zeigt eine , nicht durch die Ansprüche gedeckte Einstellvorrichtung 40 eines zweiten Ausführungsbeispiels, dass bis auf einen nachfolgend beschriebenen Bremsring 60 dem ersten Ausführungsbeispiel entspricht. Der Bremsring 60 des zweiten Ausführungsbeispiels weist einen kreiszylindrischen Kragenzug 64 auf. Durch den Kragenzug 64 hindurch verläuft ein Fuß 82 eines Ritzels 80. Der Durchmesser des Kragenzugs 64 entspricht dem Durchmesser des Fußes 82 des Ritzels 80. Vorliegend ist ein kreiszylindrischer Fuß 82 des Ritzels 80 mittels einer Spielpassung in dem Kragenzug 64 angeordnet. Der Bremsring 60 der Einstellvorrichtung 40 ist unmittelbar mit dem Sitzrahmen 30 fest verbunden, vorzugsweise mit dem Sitzrahmen 30 verschweißt und/oder verklebt.

Obwohl die Erfindung in den Zeichnungen und der vorausgegangenen Darstellung im Detail beschrieben wurde, sind die Darstellungen illustrativ und beispielhaft und nicht einschränkend zu verstehen. Insbesondere ist die Wahl der zeichnerisch dargestellten Proportionen der einzelnen Elemente nicht als erforderlich oder beschränkend auszulegen. Weiterhin ist die Erfindung insbesondere nicht auf die erläuterten Ausführungsbeispiele beschränkt. Weitere Varianten der Erfindung und ihre Ausführung ergeben sich für den Fachmann aus der vorangegangenen Offenbarung, den Figuren und den Patentansprüchen, soweit der Gegenstand nicht über den Schutzbereich der Ansprüche hinausgeht.

In den Patentansprüchen verwendete Begriffe wie "umfassen", "aufweisen", "beinhalten", "enthalten" und dergleichen schließen weitere Elemente oder Schritte nicht aus. Die Verwendung des unbestimmten Artikels schließt eine Mehrzahl nicht aus.

### Bezugszeichenliste

- 1: Fahrzeugsitz
- 3: Sitzteil
- 5: Lehne
- 10: Längseinsteller
- 11: erste Sitzschiene
- 13: zweite Sitzschiene
- 15: Schienenadapter
- 20: Sitzhöheneinstellkinematik
- 22: vordere Schwinge
- 24: hintere Schwinge, erstes Bauteil
- 30: Sitzrahmen, zweites Bauteil
- 32: Sitzkissenpolster
- 40: Einstellvorrichtung
- 50: Arretierungsvorrichtung
- 60: Bremsring
- 62: Loch
- 64: Kragenzug
- 70: Bremselement
- 80: Ritzel
- 82: Fuß
- 90: Adapter
- 92: Befestigungslasche
- 94: Durchgangsloch

## Patentansprüche

1. Fahrzeugsitz (1) mit einer Einstellvorrichtung (40) zum Einstellen einer Relativposition zwischen einem ersten Bauteil (24) und einem zweiten Bauteil (30) des Fahrzeugsitzes (1), wobei die Einstellvorrichtung (40) eine Arretierungsvorrichtung (50) zum Sperren der Einstellvorrichtung (40) mittels eines Reibschlusses zwischen einem Bremsring (60) und Bremselementen (70) der Einstellvorrichtung (40) aufweist, wobei der Bremsring (60) unmittelbar mit dem ersten Bauteil (24) oder unmittelbar mit dem zweiten Bauteil (30) verbunden ist,
wobei der Bremsring (60) eine topfförmige Grundform aufweist, die in der Mitte ein Loch (62) aufweist, wodurch der Bremsring (60) offen ausgebildet ist, wobei die als Rollen ausgebildeten Bremselemente (70) in radialer Richtung betrachtet außen an dem Bremsring (60) und innen an einem mit einem Ritzel (80) drehfest verbundenen Bauteil der Einstellvorrichtung (40) anliegen, und der Bremsring (60) unmittelbar mit dem ersten Bauteil (24) oder mit dem zweiten Bauteil (30) verschweißt und/oder verklebt ist, wobei ein Durchmesser des Lochs (62) deutlich größer als ein Durchmesser eines kreiszylindrischen Fußes (82) des Ritzels (80) ist, wobei zwischen einer Außenkontur des Fußes (82) und einer Umrandung des Lochs (62) ein umlaufender Spalt ist.

2. Fahrzeugsitz (1) nach Anspruch 1, **dadurch gekennzeichnet, dass** die Einstellvorrichtung (40) zum Einstellen einer Sitzhöheneinstellkinematik (20) dient.

3. Fahrzeugsitz (1) nach Anspruch 1 oder 2, **dadurch gekennzeichnet, dass** das erste Bauteil eine hintere Schwinge (24) einer Sitzhöheneinstellkinematik (20) ist, und das zweite Bauteil ein Sitzrahmen (30) ist.

4. Fahrzeugsitz (1) nach einem der Ansprüche 1 bis 3, **dadurch gekennzeichnet, dass** der Bremsring (60) mittels eines Laserschweißverfahrens mit dem ersten Bauteil (24) oder mit dem zweiten Bauteil (30) verschweißt ist.

5. Fahrzeugsitz (1) nach einem der Ansprüche 1 bis 4, **dadurch gekennzeichnet, dass** die Einstellvorrichtung (40) die Arretierungsvorrichtung (50) zum Sperren der Einstellvorrichtung (40) mittels eines Reibschlusses und zusätzlich eine Sperreinheit zum formschlüssigen Verriegeln der Einstellvorrichtung (40) aufweist.

6. Fahrzeugsitz (1) nach einem der Ansprüche 1 bis 5, **dadurch gekennzeichnet, dass** die Einstellvorrichtung (40) eine diskontinuierliche Bewegung eines Betätigungselements in eine kontinuierliche Drehbewegung des Ritzels (80) übersetzt.

7. Fahrzeugsitz (1) nach einem der Ansprüche 1 bis 6, **dadurch gekennzeichnet, dass** die Einstellvorrichtung (40) drei Rollenpaare (70, 70) aufweist.

8. Fahrzeugsitz (1) nach einem der Ansprüche 1 bis 7, **dadurch gekennzeichnet, dass** der Bremsring (60) ein Klemmring ist, und dass die Bremselemente (70) Klemmelemente sind.

9. Fahrzeugsitz (1) nach Anspruch 8, **dadurch gekennzeichnet, dass** die Arretierungsvorrichtung (50) ein Klemmkörper-Freilauf ist.

## Claims

1. Vehicle seat (1) having an adjusting device (40) for adjusting a relative position between a first component (24) and a second component (30) of the vehicle seat (1), wherein the adjusting device (40) has a securing device (50) for blocking the adjusting device (40) by means of a frictional engagement between a braking ring (60) and braking elements (70) of the adjusting device (40), wherein the braking ring (60) is connected directly to the first component (24) or directly to the second component (30), wherein the braking ring (60) has a pot-shaped basic form, which has a hole (62) in the middle, as a result of which the braking ring (60) has an open form, wherein the braking elements (70) in the form of rollers lie against the braking ring (60) on the outside and against a component of the adjusting device (40) that is connected to a pinion (80) for conjoint rotation therewith on the inside as seen in the radial direction, and the braking ring (60) is welded and/or adhesively bonded directly to the first component (24) or to the second component (30), wherein a diameter of the hole (62) is considerably larger than a diameter of a circular-cylindrical base (82) of the pinion (80), wherein there is a peripheral gap between an outer contour of the base (82) and a border of the hole (62).

2. Vehicle seat (1) according to Claim 1, **characterized in that** the adjusting device (40) is used to adjust seat height adjustment kinematics (20).

3. Vehicle seat (1) according to Claim 1 or 2, **characterized in that** the first component is a rear rocker arm (24) of seat height adjustment kinematics (20), and the second component is a seat frame (30).

4. Vehicle seat (1) according to one of Claims 1 to 3, **characterized in that** the braking ring (60) is welded to the first component (24) or to the second component (30) by means of a laser welding method.

5. Vehicle seat (1) according to one of Claims 1 to 4, **characterized in that** the adjusting device (40) comprises the securing device (50) for blocking the adjusting device (40) by means of a frictional engagement and additionally a blocking unit for the form-fitting locking of the adjusting device (40).

6. Vehicle seat (1) according to one of Claims 1 to 5, **characterized in that** the adjusting device (40) translates a discontinuous movement of an actuation element into a continuous rotational movement of the pinion (80).

7. Vehicle seat (1) according to one of Claims 1 to 6, **characterized in that** the adjusting device (40) has three roller pairs (70, 70).

8. Vehicle seat (1) according to one of Claims 1 to 7, **characterized in that** the braking ring (60) is a clamping ring, and **in that** the braking elements (70) are clamping elements.

9. Vehicle seat (1) according to Claim 8, **characterized in that** the securing device (50) is a clamping body freewheel.

## Revendications

1. Siège de véhicule (1) comprenant un dispositif de réglage (40) pour régler une position relative entre un premier composant (24) et un deuxième composant (30) du siège de véhicule (1), le dispositif de réglage (40) présentant un dispositif d'arrêt (50) pour bloquer le dispositif de réglage (40) au moyen d'un engagement par friction entre une bague de freinage (60) et des éléments de freinage (70) du dispositif de réglage (40), la bague de freinage (60) étant directement reliée au premier composant (24) ou directement au deuxième composant (30),
la bague de freinage (60) présentant une forme de base en forme de pot qui présente un trou (62) au centre, la bague de freinage (60) étant ainsi configurée sous forme ouverte,
les éléments de freinage (70) configurés sous forme de rouleaux s'appliquant, tel que vu dans la direction radiale, extérieurement contre la bague de freinage (60) et intérieurement contre un composant du dispositif de réglage (40) relié de manière immobile en rotation à un pignon (80), et la bague de freinage (60) étant directement soudée et/ou collée au premier composant (24) ou au deuxième composant (30), un diamètre du trou (62) étant considérablement plus grand qu'un diamètre d'un pied cylindrique circulaire (82) du pignon (80), une fente périphérique étant présente entre un contour extérieur du pied (82) et une bordure du trou (62).

2. Siège de véhicule (1) selon la revendication 1, **caractérisé en ce que** le dispositif de réglage (40) sert à régler une cinématique de réglage de la hauteur du siège (20).

3. Siège de véhicule (1) selon la revendication 1 ou 2, **caractérisé en ce que** le premier composant est un bras oscillant arrière (24) d'une cinématique de réglage de la hauteur du siège (20), et le deuxième composant est un cadre de siège (30).

4. Siège de véhicule (1) selon l'une quelconque des revendications 1 à 3, **caractérisé en ce que** la bague de freinage (60) est soudée au premier composant (24) ou au deuxième composant (30) au moyen d'un procédé de soudage laser.

5. Siège de véhicule (1) selon l'une quelconque des revendications 1 à 4, **caractérisé en ce que** le dispositif de réglage (40) présente le dispositif d'arrêt (50) pour bloquer le dispositif de réglage (40) au moyen d'un engagement par friction et, en outre, une unité de blocage pour verrouiller le dispositif de réglage (40) par complémentarité de forme.

6. Siège de véhicule (1) selon l'une quelconque des revendications 1 à 5, **caractérisé en ce que** le dispositif de réglage (40) transforme un mouvement discontinu d'un élément d'actionnement en un mouvement de rotation continu du pignon (80).

7. Siège de véhicule (1) selon l'une quelconque des revendications 1 à 6, **caractérisé en ce que** le dispositif de réglage (40) présente trois paires de rouleaux (70, 70).

8. Siège de véhicule (1) selon l'une quelconque des revendications 1 à 7, **caractérisé en ce que** la bague de freinage (60) est une bague de serrage, et **en ce que** les éléments de freinage (70) sont des éléments de serrage.

9. Siège de véhicule (1) selon la revendication 8, **caractérisé en ce que** le dispositif d'arrêt (50) est une roue libre à corps de serrage.
